# EUROPÄISCHE PATENTSCHRIFT

(11) **EP 0 897 327 B1**
(45) Veröffentlichungstag und Bekanntmachung des Hinweises auf die Patenterteilung: **11.07.2001**
(21) Anmeldenummer: 97915243.6
(22) Anmeldetag: 10.04.1997
(51) Int. Cl.: B06B 1/08, H03H 9/22

(54) **VORRICHTUNG UND DEREN VERWENDUNG ZUR ERZEUGUNG ELEKTROMAGNETISCHER PULSE**
DEVICE AND ITS USE FOR PRODUCING ELECTROMAGNETIC PULSES
DISPOSITIF ET SON UTILISATION POUR PRODUIRE DES IMPULSIONS ELECTROMAGNETIQUES

(30) Priorität: 07.05.1996 CH 115296
(43) Veröffentlichungstag der Anmeldung: 24.02.1999
(73) Patentinhaber: RQM Raum-Quanten-Motoren AG, 8640 Rapperswil (CH)
(72) Erfinder: GIBAS, Peter, Alfred, D-04430 Burghausen (DE); LEHNER, Hans, CH-8645 Jona (CH); GREILINGER, Friedrich, D-52066 Aachen (DE)
(74) Vertreter: Schwabe, Hans-Georg, Dipl.-Ing.
(86) Internationale Anmeldenummer: CH9700143
(87) Internationale Veröffentlichungsnummer: WO9741970

(56) Entgegenhaltungen:
- US-A- 2 438 925
- US-A- 2 444 967

## Beschreibung

Die Erfindung betrifft eine Vorrichtung und deren Verwendung zur Erzeugung von elektromagnetischen Pulsen auf der Grundlage elektrisch - magnetisch - mechanischer Wechselwirkungen zwischen elektromagnetisch und mechanisch schwingungsfähigen Systemen und kann angewendet werden in der Grundlagenforschung zur Struktur der Materie, zur Festkörperphysik, zu Materialuntersuchungen sowie für EMV - Untersuchungen.

Zur Erzeugung starker elektromagnetischer Impulse werden im bekannten Stand der Technik Hochstrom- oder Hochspannungsentladungen in den verschiedensten Transformations- und Anpassungsvarianten eingesetzt (siehe einschlägige Literatur zu EMV - oder EMP - Testequipments ).
Auf dem Gebiet der elektrisch - mechanischen Energiekonversion zur Impuls - oder Schwingungserzeugung sind eine Vielzahl von Anordnungen bekannt, die nach elektrodynamischen oder magnetinduktiven Grundprinzipien arbeiten, d.h. auf der Wirkung der Lorentz - Kraft basieren, sowie wiederum eine Vielfalt von Anordnungen nach elektrostatischen, piezoelektrischen oder piezomagnetischen Wirkprinzipien (siehe einschlägige Literatur zur Ultraschallerzeugung ).

Der Erfindung liegen die Aufgaben zugrunde, eine Vorrichtung und ein Verfahren anzugeben, womit auf dem Gebiet der Erzeugung von starken elektromagnetischen Pulsen z.B. zur Strukturaufklärung und - beeinflussung von Stoffen oder auch zur Verwendung bei EMV - Untersuchungen eine neuartige technologische Variante zur Erschließung weiterer Einsatzgebiete möglich wird.

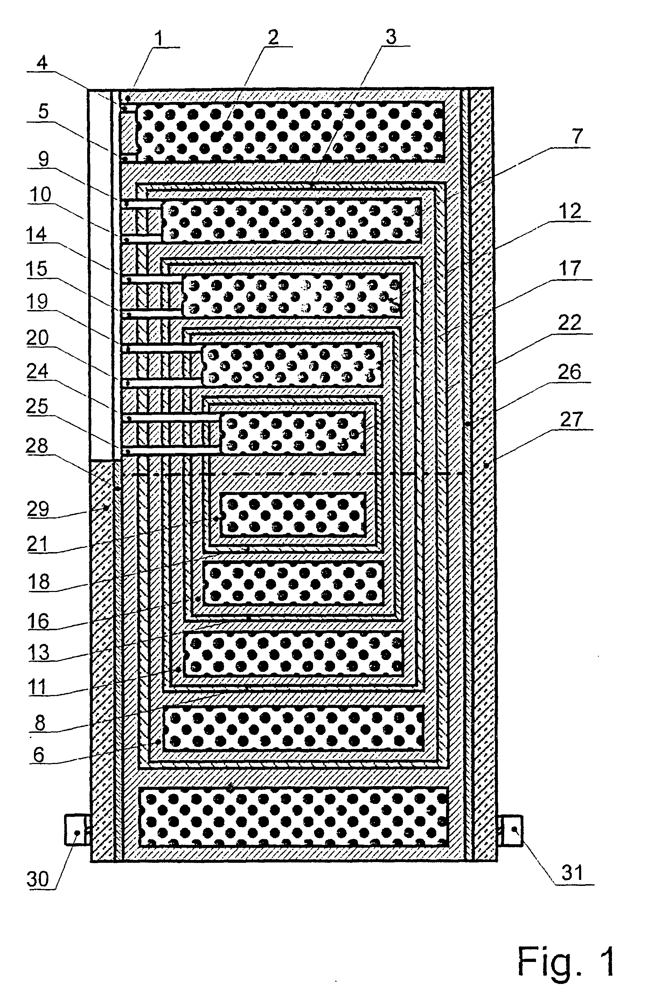

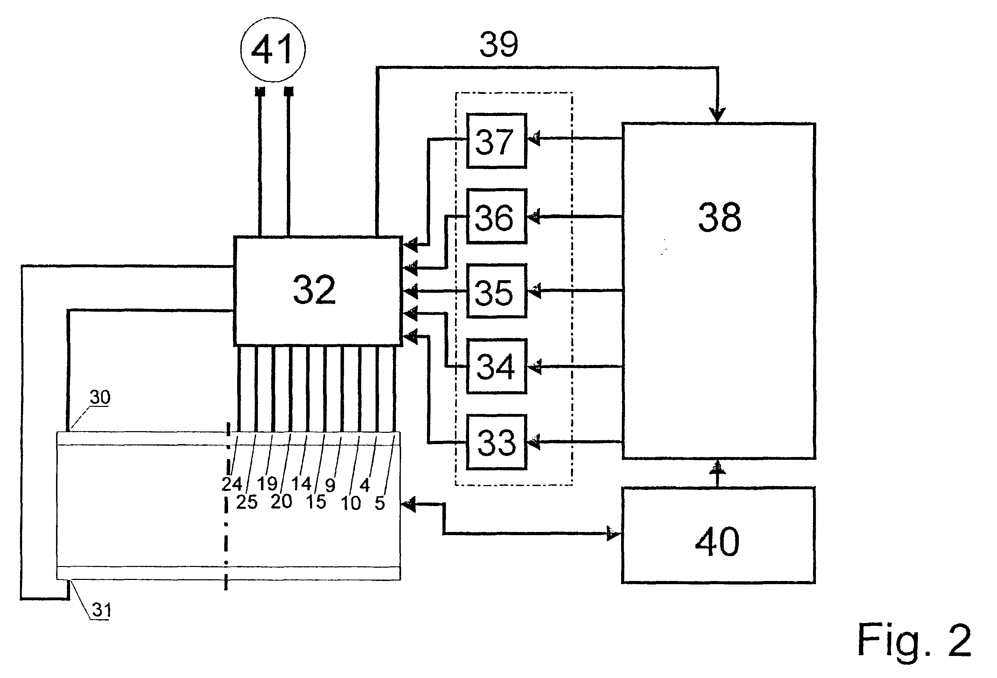

Diese Aufgaben werden gemäß dem Konzept der Erfindung gelöst, wie es in den Ansprüchen 1 und 10 definiert ist.
Weiterbildungen des Erfindungsprinzips ergeben sich aus den abhängigen Ansprüchen.
In den angefügten Zeichnungen zeigen Fig.1 in einer Schnittdarstellung den prinzipiellen konstruktiven Aufbau des Kernstücks der Vorrichtung, und zwar von 5 (d.h. 2 + n, mit n = 3) ineinander nach dem "Matrjoschka" - Prinzip (konzentrisch ineinander geschachtelte Anordnung) verschachtelten elektromagnetischen Topfmagnetsystemen und Fig.2 die prinzipiellen schaltungs- und meßtechnischen Verbindungen des Magnetsystems von Fig.1 mit den zur Erregung dienenden Impulsgeneratoren sowie einer Auswerte- und Ansteuereinheit und einer Vibrationsmeßeinrichtung.

In Fig.1 ist ein äußerer zylinderförmiger, im Inneren hohler elektromagnetischer Topfkreis 1 dargestellt, in dessen Wandung sich eine hohlzylinderformige Aussparung zur Aufnahme einer Erregerspule 2 befindet. In dem inneren Hohlraum dieses Topfkreises 1 ist ein prinzipiell gleich aufgebauter Topfkreis 6 angebracht, der in seinen äußeren Abmessungen genau der um die Wandstärke des Dielektrikums 3 verminderten Größe der inneren zylinderförmigen Höhlung des Topfkreises 1 entspricht. In seiner äußeren Wandung ist in einer entsprechenden Aussparung die Erregerspule 7 angeordnet. Nach dem gleichen "Matrjoschka" - Verkleinerungsprinzip sind nun die weiteren Topfkreise 11, 16 und 21 mit den Erregerspulen 12, 17 und 22 ineinander geschachtelt. Der innerste Topfkreis 21 hat dabei keinen axialen Hohlraum. Voneinander getrennt sind die Topfkreise 6, 11, 16 und 21 durch die dielektrischen Schichten 8, 13 und 18.

Als Kernmaterial für die Topfkreisanordnungen 1, 6, 11, 16 und 21 wird ferromagnetisches Material mit möglichst ausgeprägten magnetostriktiven Eigenschaften verwendet, welches zur Verminderung der Wirbelströme auch geblecht sein kann oder bei dem die Ausgangssubstanzen gesintert oder verbacken sein können.

Zur Realisierung der elektrischen Anschlüsse der Erregerspulen sind in axialer Richtung jeweils zwei Bohrungen auch durch die darüber liegenden Topfkreise angebracht und zwar 4 und 5 für den Topfkreis 1, 9 und 10 für den Topfkreis 6, 14 und 15 für den Topfkreis 11, 19 und 20 für den Topfkreis 16 sowie 24 und 25 für den Topfkreis 21.
In axialer Richtung ist der äußere Topfkreis 1 mit je einer metallischen Platte 27 und 29 eingeschlossen, wobei diese vom Kernmaterial durch ein dielektrisches Material 26 und 28 getrennt sind und dabei zur Gewährleistung der Durchführung der elektrischen Zuleitungen geschlitzt und/oder gebohrt sind.
Die an den Metallplatten 27 und 28 angebrachten Anschlüsse 30 und 31 sind mit einer An - und Auskoppelschaltung 32 verbunden.

Fig. 2 zeigt schematisch ein Ausführungsbeispiel der schaltungs- und meßtechnischen Ausführung der erfindungsgemäßen Vorrichtung.

Dabei sind die Erregerspulen der Topfkreissysteme 1, 6, 11, 16 und 21 über eine An - und Auskoppelschaltung 32 mit Impulsgeneratoren 33, 34, 35, 36 und 37 verbunden, die Einzelimpulse abgeben mit einstellbaren Impulsbreiten zwischen 200 ns und 1 s, mit einstellbarer Energiedosierung im Raster von 1/100 Ws, bei einer einstellbaren zeitlichen Feineinstellung des Einsatzzeitpunktes (Vorderflanke) im Raster von 5 ns, bei wählbarer positiver oder negativer Polarität und bei Möglichkeit der gleichzeitigen Überlagerung mit einem wählbaren positiven oder negativen Gleichanteil.
Die Einstellung und Auswahl dieser Parameter wird von einer programmierbaren Auswerte- und Ansteuereinheit 38 bewirkt, die zur Beeinflussung vorprogrammierbarer Parameter für die Impulsgeneratoren 33 bis 37 die gemessenen elektrischen Augenblickswerte der Erregerspulen 2, 7, 12, 17 und 22 sowie der Metallplatten 27 und 29 und die über eine Vibrationsmeßeinrichtung 40 gemessenen Augenblickswerte der mechanischen Schwingungen des Topfkreissystems auswertet.

Diese erfindungsgemäße Vorrichtung läßt nun durch die Variationsmöglichkeiten der Parameter für die Impulsgeneratoren eine große Vielfalt der Erregung der elektrisch, magnetisch und mechanisch verkoppelten Schwingungssysteme zu , die nun z.B. als starke elektromagnetische Pulse am Ausgang 41 der An - und Auskoppelschaltung 38 der Erfüllung der Aufgabe der Erfindung dienen. Darüber hinaus können durchaus auch noch weitere neue Einsatzgebiete erschlossen werden.

## Patentansprüche

1. Vorrichtung zur Erzeugung von elektromagnetischen Pulsen auf der Grundlage elektrisch - magnetisch - mechanischer Wechselwirkungen zwischen elektromagnetisch und mechanisch schwingungsfähigen Systemen,
**gekennzeichnet durch**
- einen äusseren in einer axialen Richtung zylinderförmigen, im Inneren hohlen elektromagnetischen Topfkreis (1), in dessen Wandung sich eine hohizylinderförmige Aussparung befindet, in der eine Erregerspule (2) angebracht ist,
- einen weiteren, im inneren zylinderförmigen Hohlraum des äusseren Topfkreises (1) angebrachten, prinzipiell gleich aufgebauten Topf kreis (6) mit einer Erregerspule (7), der in seinen äusseren Abmessungen genau der um die Wandstärke eines sich zwischen den Topfkreisen (1, 6) befindlichen Dielektrikums (3) verminderten Grösse des inneren zylinderförmigen Hohlraumes des äusseren Topfkreises (1) entspricht, wobei die Topfkreise (3, 6) jeweils ein Kernmaterial und eine Erregerspule beinhalten,
- weitere n nach dem gleichen "Matrjoschka" Verkleinerungsprinzip aufgebaute und ineinander geschachtelte Topfkreise (5n - 4 = 11, 16, 21 ... ) mit Erregerspulen (5n - 3 = 12, 17, 22 ... ) und mit die Topfkreise trennenden dielektrischen Schichten (5n - 7 = 8, 13, 18 ... ), wobei der innerste Topfkreis keinen axialen Hohlraum hat,
- zwei Metallplatten (27, 29), die jeweils getrennt durch ein Dielektrikum (26, 28) den äusseren Topfkreis in der axialen Richtung einschliessen.

2. Vorrichtung nach Anspruch 1,
**dadurch gekennzeichnet,**
dass das Kernmaterial für die Topfkreise (1, 6, 11, 16, 21 ...) ein ferromagnetisches Material mit möglichst ausgeprägten magnetostriktiven Eigenschaften ist.

3. Vorrichtung nach Anspruch 1 oder 2,
**dadurch gekennzeichnet,**
dass das Kernmaterial zur Verminderung der Wirbelströme geblecht ist.

4. Vorrichtung nach einem der Ansprüche 1 bis 3,
**dadurch gekennzeichnet,**
dass die Ausgangssubstanzen des Kernmaterials zur Verminderung der Wirbelströme gesintert oder verbacken sind.

5. Vorrichtung nach einem der Ansprüche 1 bis 4,
**dadurch gekennzeichnet,**
dass die dielektrischen Schichten (3, 8, 13, 18,...; 26, 28) eine möglichst grosse relative Dielektrizitätskonstante εᵣ haben.

6. Vorrichtung nach einem der Ansprüche 1 bis 5,
**dadurch gekennzeichnet,**
dass n vorzugsweise kleiner gleich 5 ist.

7. Vorrichtung nach Anspruch 1,
**dadurch gekennzeichnet,**
- dass die Erregerspulen (2, 7, 12, 17, 22, ...) der Topfkrelse (1, 6, 11, 16, 21, ...) mit Impulsgeneratoren (33, 34, 35, 36, 37, ...) verbunden sind,
- dass die Impulsgeneratoren (33, 34, 35, 36, 37, ...) mit einer programmierbaren Auswerte- und Ansteuereinheit (38) verbunden sind,
- dass die programmierbare Auswerte- und Ansteuereinheit (38) mit einer Vibrationsmesseinrichtung (40) verbunden ist und
- dass die von der Vorrichtung erzeugten elektromagnetischen Pulse über einen Ausgang (41) einer An- und Auskoppeleinheit (32) ausgekoppelt werden.

8. Vorrichtung nach Anspruch 7,
**dadurch gekennzeichnet,**
dass die Impulsgeneratoren (33, 34, 35, 36, 37, ...) Einzelimpulse zur Erzeugung eines Ansteuermusters abgeben
- mit einstellbaren Impulsbreiten zwischen 20 ns und 1 s,
- mit einstellbarer Energiedosierung im Raster von 1/100 Ws,
- bei einer einstellbaren zeitlichen Feineinstellung des Einsatzzeitpunktes im Raster von 5 ns,
- bei wählbarer positiver oder negativer Polarität, und
- bei Möglichkeit der gleichzeitigen Überlagerung mit einem wählbaren positiven oder negativen Gleichanteil.

9. Vorrichtung nach einem der Ansprüche 7 oder 8,
**dadurch gekennzeichnet,**
dass die Einstellung und Auswahl der Impulsparameter der Impulsgeneratoren (33, 34 , 35, 36, 37, ...) durch die programmierbare Auswerte- und Ansteuereinheit (38) in Auswertung der Daten der gemessenen elektrischen Augenblickswerte der Erregerspulen (2, 7, 12, 17, 22, ...) sowie der Metallplatten (27, 29) und der über die Vibrationsmesseinrichtung (40). gemessenen örtlichen und zeitlichen Augenblickswerte der mechanischen Schwingungen des Topfkreissystems vorgenommen wird.

10. Verwendung der Vorrichtung nach Anspruch 8,
**dadurch gekennzeichnet,**
- dass zuerst Ansteuerungsmuster der zeitlichen und energetischen Parameter der Ansteuerungsimpulse zur Erzielung spezifischer Eigenresonanzen des Systems aufgenommen werden, und
- dass danach unter Verwendung verschiedenartigster Verkopplungsmöglichkeiten der spezifischen Ansteuerungsmuster eine grosse Varianz von elektromagnetischen Pulsen mit wiederum verschiedensten zeitlichen und energetischen Parametern am Ausgang (41) der Vorrichtung zur Verfügung gestellt wird.

11. Verwendung nach Anspruch 10,
**dadurch gekennzeichnet,**
dass zur Vermeidung von Resonanzüberhöhungen einzelner Eigenschwingungen, die zur Zerstörung von Teilen der Vorrichtung führen können, in der programmierbaren Auswerteund Ansteuereinheit (38) ein selbstlernender Algorithmus eingesetzt wird, der auf solche Ereignisse durch vorausschauende Trendabschätzung reagiert.

## Claims

1. Device for generating electromagnetic pulses based on electro-magneto-mechanical interactions between electromagnetic systems and systems capable of mechanical vibration, characterized by
- an outer electromagnetic cavity resonator (1) that is cylindrical in an axial direction and is hollow in the interior and in whose wall there is a hollow-cylindrical cutout in which an excitation coil (2) is mounted,
- a further cavity resonator (6) that is mounted in the inner cylindrical cavity of the outer cavity resonator (1) and is in principle of the same construction and that has an excitation coil (7) whose external dimensions are precisely equal to the size of the inner cylindrical cavity of the outer cavity resonator (1) which size is reduced by the wall thickness of a dielectric (3) situated between the cavity resonators (1, 6), the cavity resonators (3, 6) each containing a core material and an excitation coil,
- a further n cavity resonators (5n - 4 = 11, 16, 21 ...) having excitation coils (5n - 3 = 12, 17, 22 ...) and having dielectric layers (5n - 7 = 8, 13, 18 ...) separating the cavity resonators, which cavity resonators are constructed on the same "nesting doll" reduction principle and are nested one in the other, the innermost cavity resonator having no axial cavity,
- two metal plates (27, 29) that are each separated by a dielectric (26, 28) and enclose the outer cavity resonator in the axial direction.

2. Device according to Claim 1, characterized in that the core material for the cavity resonators (1, 6, 11, 16, 21 ...) is a ferromagnetic material having as marked magnetostrictive properties as possible.

3. Device according to Claim 1 or 2, characterized in that the core material is laminated to reduce the eddy currents.

4. Device according to one of Claims 1 to 3, characterized in that the starting substances of the core material are sintered or baked to reduce the eddy currents.

5. Device according to one of Claims 1 to 4, characterized in that the dielectric layers (3, 8, 13, 18, ...; 26, 28) have as high a relative permittivity εr as possible.

6. Device according to one of Claims 1 to 5, characterized in that n is preferably less than 5.

7. Device according to Claim 1, characterized
- in that the excitation coils (2, 7, 12, 17, 22, ...) of the cavity resonators (1, 6, 11, 16, 21, ...) are connected to pulse generators (33, 34, 35, 36, 37, ...),
- in that the pulse generators (33, 34, 35, 36, 37, ...) are connected to a programmable evaluation and triggering unit (38),
- in that the programmable evaluation and triggering unit (38) is connected to a vibration measuring instrument (40), and
- in that the electromagnetic pulses generated by the device are coupled out via an output (41) to a coupling-in and coupling-out unit (32).

8. Device according to Claim 7, characterized in that the pulse generators (33, 34, 35, 36, 37, ...) deliver individual pulses in order to generate a triggering pattern
- having an adjustable pulse width of between 20 ns and 1 s,
- having an adjustable energy metering in steps of 1/100 Ws,
- accompanied by an adjustable fine time adjustment of the insertion time in steps of 5 ns,
- accompanied by selectable positive or negative polarity, and
- accompanied by a possibility of simultaneous superimposition with a selectable positive or negative direct component .

9. Device according to one of Claims 7 or 8, characterized in that the pulse parameters of the pulse generators (33, 34, 35, 36, 37, ...) are adjusted and selected by the programmable evaluation and triggering unit (38) by evaluating the data of the measured electrical instantaneous values of the excitation coils (2, 7, 12, 17, 22, ...), the metal plates (27, 29) and the spatial and time instantaneous values of the mechanical vibrations of the cavity resonator system measured by the vibration measuring instrument (40).

10. Use of the device according to Claim 8, characterized
- in that triggering patterns of the time and energy parameters of the triggering pulses for achieving specific self-resonances of the system are first picked up, and
- in that a large variety of electromagnetic pulses having in turn very varied time and energy parameters are then provided at the output (41) of the device using a very wide variety of ways of coupling the specific triggering patterns.

11. Use according to Claim 10, characterized in that, to avoid resonance overshoots in individual self-sustained oscillations, which may result in the destruction of parts of the device, there is used in the programmable evaluation and triggering unit (38) a self-learning algorithm that responds to such events by a predictive trend estimation.

## Revendications

1. Dispositif pour la création d'impulsions électromagnétiques à base d'effets oscillants électriques - magnétiques - mécaniques entre des systèmes oscillants électromagnétiques et mécaniques, caractérisé par
- un circuit électromagnétique extérieur à cavité (1), de forme cylindrique dans une direction axiale, à l'intérieur creux, dans la paroi duquel se trouve un évidement en forme de cylindre creux dans lequel est installée une bobine d'excitation (2),
- un autre circuit à cavité (6) avec une bobine d'excitation (7), installé dans l'espace intérieur creux de forme cylindrique du circuit extérieur à cavité (1), de structure essentiellement identique, dont les dimensions extérieures correspondent exactement à la taille de l'espace intérieur creux en forme de cylindre du circuit extérieur à cavité (1), diminuée de l'épaisseur de paroi d'un diélectrique (3) qui se trouve entre les circuits à cavité (1, 6), les circuits à cavité (3, 6) contenant chacun un matériau d'âme et une bobine d'excitation,
- n autres circuits à cavité (5n - 4 = 11, 16, 21, ...) construits selon le même principe de diminution "en poupées russes" et empilés les uns dans les autres, dotés de bobines d'excitation (5n - 3 = 12, 17, 22, ...) et de couches de diélectrique (5n - 7 = 8, 13, 18, ...) séparant les circuits à cavité, le circuit à cavité situé le plus à l'intérieur ne présentant pas d'espace creux axial,
- deux plaques métalliques (27, 29), séparées l'une de l'autre par un diélectrique (26, 28), qui englobent le circuit à cavité extérieur dans la direction axiale.

2. Dispositif selon la revendication 1, caractérisé en ce que le matériau d'âme des circuits à cavité (1, 6, 11, 16, 21, ...) est un matériau ferromagnétique dont les propriétés magnétostrictives sont aussi élevées que possible.

3. Dispositif selon la revendication 1 ou 2, caractérisé en ce que, pour diminuer les courants de Foucault, le matériau d'âme en configuré en tôles.

4. Dispositif selon l'une des revendications 1 à 3, caractérisé en ce que, pour diminuer les courants de Foucault, les substances de départ des matériaux d'âme sont frittés ou cuits.

5. Dispositif selon l'une des revendications 1 à 4, caractérisé en ce que les couches de diélectrique (3, 8, 13, 18, ...; 26, 28) ont une constante diélectrique relative εᵣ aussi grande que possible.

6. Dispositif selon l'une des revendications 1 à 5, caractérisé en ce que n est de préférence inférieur ou égal à 5.

7. Dispositif selon la revendication 1, caractérisé en ce que
- les bobines d'excitation (2, 7, 12, 17, 22, ...) des circuits à cavité ((1, 6, 11, 16, 21, ...) sont reliés à des générateurs d'impulsions (33, 34, 35, 36, 37, ...),
- les générateurs d'impulsions (33, 34, 35, 36, 37, ...) sont reliés à une unité (38) programmable d'évaluation et de commande,
- l'unité (38) programmable d'évaluation et de commande est reliée à un dispositif (40) de mesure des vibrations, et
- par l'intermédiaire d'une sortie (41), les impulsions électromagnétiques créées par le dispositif sont couplées à une unité de découplage et de couplage (32).

8. Dispositif selon la revendication 7, caractérisé en ce que les générateurs d'impulsions (33, 34, 35, 36, 37, ...) émettent des impulsions individuelles en vue de la création d'un motif de commande
- dont la largeur des impulsions peut être réglée entre 20 ns et 1 ns,
- dont l'énergie peut être dosée par pas de 1/100 Ws
- avec un réglage temporel fin de l'instant d'application par pas de 5 ns,
- avec la possibilité de sélectionner une polarité positive ou négative, et
- avec la possibilité d'une superposition simultanée d'une composante continue positive ou négative sélectionnable.

9. Dispositif selon l'une des revendications 7 ou 8, caractérisé en ce que le réglage et la sélection des paramètres des impulsions des générateurs d'impulsions (33, 34, 35, 36, 37, ...) s'effectuent par l'unité programmable (38) d'évaluation et de commande, par évaluation des données des valeurs électriques instantanées mesurées sur les bobines d'excitation (2, 7, 12, 17, 22, ...) ainsi que sur les plaques métalliques (27, 29) et sur les valeurs instantanées temporelles et locales des oscillations mécaniques du système de circuits à cavité mesurées par le dispositif (40) de mesure des vibrations.

10. Utilisation du dispositif selon la revendication 8, caractérisée en ce que
- tout d'abord, des motifs de commande des paramètres temporels et énergétiques des impulsions de commande sont enregistrés en vue d'obtenir les résonances propres spécifiques du système, et
- ensuite, par recours aux possibilités de couplage les plus différentes des motifs spécifiques de commande, une importante variance des impulsions électromagnétiques est rendue disponible sur la sortie (41) du dispositif, de nouveau avec les paramètres temporels et énergétiques les plus différents.

11. Utilisation selon la revendication 10, caractérisée en ce que pour éviter des pics de résonance d'oscillations propres individuelles qui pourraient entraîner la destruction de parties du dispositif, un algorithme à auto-apprentissage qui réagit à de telles excitations par une estimation prédictive de tendance est implanté dans l'unité (38) programmable d'évaluation et de commande.
